# EUROPEAN PATENT SPECIFICATION

(11) **EP 0 745 660 B1**
(45) Date of publication and mention of the grant of the patent: **26.01.2000**
(21) Application number: 95113698.5
(22) Date of filing: 31.08.1995
(51) Int. Cl.: C10G 45/08, B01J 37/08

(54) **Desulphurization method for catalytically cracked gasoline**
Entschwefelungsverfahren für katalytisches Krackbenzin
Méthode de désulfuration d'un naphta de craquage catalytique

(30) Priority: 02.06.1995 JP 15881795
(43) Date of publication of application: 04.12.1996
(73) Proprietor: Nippon Mitsubishi Oil Corporation, Tokyo (JP)
(72) Inventor: Sadakane, Osamu, Ota-ku, Tokyo (JP); Sasaki, Yoichi, Ota-ku, Tokyo (JP); Ohnishi, Ryozi, Kitasoma-gun, Ibaragi (JP)
(74) Representative: Hansen, Bernd, Dr. Dipl.-Chem.

(56) References cited:
- EP-A- 0 541 994
- EP-A- 0 582 403

## Description

The present invention relates to a desulfurization method for catalytically cracked gasoline. More specifically, the invention relates to a desulfurization method including subjecting catalytically cracked gasoline containing sulfur compounds and olefin components to a hydrodesulfurization treatment using a catalyst, wherein the exothermic reaction is restrained from the beginning of the initiation of the reaction, lowering of the octane value is less, and a stabilized reaction can be carried out.

In the field of petroleum refining, as a high-octane value gasoline stock containing a large amount of olefin components, there is catalytically cracked gasoline. This is a gasoline fraction obtained by catalytically cracking a heavy petroleum fraction, for example, a stock oil such as a vacuum gas oil or an atmospheric residual oil and recovering and distilling the catalytically cracked product, and is used as one of the main blending stocks of an automotive gasoline. The catalytically cracked gasoline has a boiling point of from about 20°C to about 220°C and a high octane value stock oil largely containing olefins and aromatics.

On the other hand, the foregoing stock oil for catalytic cracking fundamentally contains a relatively large amount of sulfur compounds, and when the stock oil is subjected to a catalytic cracking treatment as it is, the content of sulfur compounds in the catalytically cracked product becomes large. Accordingly, when the concentration of sulfur components in the stock oil for catalytic cracking is low, the stock oil is catalytically cracked as it is, but when the concentration of sulfur components is high, if the catalytically cracked product of the stock oil is used as a blending stock of an automotive gasoline, there is a possibility of causing a problem for the environment, and hence it is frequently practiced that the stock oil for catalytic cracking apparatus is previously subjected to a desulfurization treatment.

As the desulfurization treatment, a hydrodesulfurization treatment is conventionally carried out in the field of petroleum refining, and in the hydrodesulfurization treatment, a stock oil to be desulfurized is brought into contact with a proper hydrodesulfurization treatment catalyst in a high temperature and high pressure hydrogen atmosphere.

In the case of the hydrodesulfurization treatment of a vacuum gas oil or an atmospheric residual oil, which are the stock oils for catalytic cracking, as the hydrodesulfurization treatment catalyst, a catalyst composed of at least one element belonging to groups VIII or VI of the periodic table, such as chromium, molybdenum, tungsten, cobalt or nickel, carried on a proper base material such as alumina, is used. Also, as the conditions for the hydrodesulfurization treatment, a temperature of from about 300°C to about 400°C, a hydrogen partial pressure of from about 30 to about 200 kg/cm², and a liquid hourly space velocity (LHSV) of from about 1 to about 10 per hour are employed.

However, in the case of the hydrodesulfurization treatment of a heavy petroleum fraction such as a vacuum gas oil or an atmospheric residual oil, which are stock oils for catalytic cracking, since the treatment conditions are a high temperature and a high pressure as described above, the design condition of the apparatus becomes severe, and in the case of increasing an apparatus for coping with the deficiency of the apparatus, there occurs a problem that the construction cost is high.

Catalytically cracked gasoline can be directly subjected to a hydrodesulfurization treatment, but in this case, there is a problem that since the olefin components contained in the catalytically cracked gasoline are hydrogenerated and the content of the olefin components is reduced, the octane value is lowered. Also, the heat value generated by the hydrogenation reaction is as large as 125,6 kJ/mol (30 kcal/mol), whereby it is accompanied by a considerable difficulty to proceed with the desulfurization reaction by restraining the hydrogenation reaction. In particular, at the beginning of the reaction, the hydrogenation activity of the catalyst is very high, and hence even when a heat-prevention and cooling counterplan such as hydrogen quenching, is applied, it is required to control the apparatus with the utmost care for preventing the occurrence of a run-away reaction.

As the catalyst being used in the apparatus for hydrodesulfurizing catalytically cracked gasoline containing sulfur compounds and olefin components, a catalyst composed of at least one element belonging to groups VIII and VI of the periodic table, such as chromium, molybdenum, tungsten, cobalt or nickel, carried on a proper base material such as alumina, is used. The catalyst is activated by pre-sulfurizing, and as the pre-sulfurization method, a method which is the same as the formation of a desulfurized catalyst of naphtha can be used. That is, a method of mixing a naphtha with a sulfur compound such as dimethyl sulfide, heating the mixture to a temperature of from about 150°C to about 350°C together with hydrogen, and passing the mixture through a reaction tower packed with the catalyst is generally used. The sulfur compound such as dimethyl sulfide, is converted into hydrogen sulfide by reacting with hydrogen at the surface of the active metal of the catalyst, and the hydrogen sulfide is further reacted with the active metal to form a metal sulfide active to a desulfurization reaction.

In the case of using a desulfurizing catalyst, usually, after pre-sulfurizing the catalyst, a stock oil is passed through the catalyst, but the catalyst after being pre-sulfurized has a greatly high hydrogenation activity, and hence when catalytically cracked gasoline is passed through the catalyst, there is a problem that not only olefin components are hydrogenated to lower the octane value but also the control of the reaction temperature is difficult because of the heat generated by the hydrogenation. Also, the reaction proceeds locally to increase the temperature, whereby there is a possibility that the catalyst is quickly deteriorated. Catalytically cracked gasoline usually contains about 30% by volume olefin components, and when these olefin components are hydrogenated, the temperature increases greatly and reaches 100°C at the highest. For preventing the large temperature increase, it is necessary to gradually pass catalytically cracked gasoline and increase the temperature while applying a heat removing and cooling counterplan such as hydrogen quenching, etc.

Since coke is also deposited by the desulfurization reaction of catalytically cracked gasoline, when the deposited amount of coke reaches about 3% by weight of the catalyst, the hydrogenation reaction is restrained. However, not only the temperature management is difficult until reaching a stabilized stage but also even a danger of causing a run-away reaction follows. Also, during the period before the stabilized stage, the hydrogenation ratio of olefin becomes high and the octane value becomes low, whereby expressly desulfurized gasoline cannot be utilized as a gasoline stock and must be diverted as a petrochemical naphtha having a low addition value.

An object of the present invention is to provide a desulfurization treatment method for catalytically cracked gasoline by contacting catalytically cracked gasoline containing sulfur compounds and olefin components with a catalyst, wherein the hydrogenating exothermic reaction of olefin components is restrained from the beginning of the initiation of the reaction, lowering of the octane value is less, and the stabilized reaction can be carried out.

As the result of various investigations for solving the foregoing theme, the inventors have achieved the epoch-making present invention of subjecting catalytically cracked gasoline containing sulfur compounds to a hydrodesulfurization treatment using a catalyst having deposited on the surface thereof coke in an amount of from 3 to 10% by weight of the catalyst said coke having an atomic ratio of carbon to hydrogen of not higher than 0.7.

In one embodiment, the present invention involves subjecting catalytically cracked gasoline containing sulfur compounds and olefin components to a hydrodesulfurization treatment, which comprises carrying out the reaction using a coke-modified catalyst having deposited on the surface thereof coke in an amount of from 3 to 10% by weight of the catalyst.

When coke is deposited on the surface of a catalyst, both the desulfurizing activity and the hydrogenating activity of olefins are lowered, but in this case, since the lowering extent of the activity is larger in the hydrogenating activity, when the reaction is carried out at the same desulfurization ratio, the hydrogenation ratio of olefins is restrained, and the desulfurization proceeds selectively. Also, since the hydrogenation reaction, which is an exothermic reaction, is restrained, a stabilized desulfurization can be operated. When the amount of coke being deposited on the surface of the catalyst is from 3 to 10% by weight, which is the range defined in this invention, a high desulfurization ratio and an excellent selectivity can be attained.

The amount of coke to be deposited can be selected in the range of from 3 to 10% by weight as described above. For maximally restraining the hydrogenating activity of olefins and minimizing lowering of the octane value, the deposition amount of coke may be increased, and when a high desulfurization faculty is desired while allowing lowering of the octane value a little, the deposition amount of coke may be decreased. If the deposition amount of coke is less than 3% by weight, the hydrogenating activity of olefins is not sufficiently restrained, whereby the feature of the present invention is difficult to be obtained, while if the deposition amount of coke is over 10% by weight, the influence on the life of the catalyst becomes large.

As to the property of coke which is used for modifying the catalyst in this invention, the atomic ratio of carbon to hydrogen is not higher than 0.7. The coke wherein the atomic ratio of carbon to hydrogen is not higher than 0.7 is a so-called soft coke, and in the case of using such a coke, since the pores and the active points of the catalyst are incompletely covered by the coke, sulfur compounds in the gaseous state easily reach the active points and are desulfurized. A coke wherein the atomic ratio of carbon to hydrogen is higher than 0.7 is a strong coke clogging the pores and the active points of the catalyst, and in the case of using such a coke, the desulfurization activity of the catalyst is greatly lowered.

As a modification method with coke, any desired method may be used, but a method of depositing coke by contacting hydrocarbons, with the catalyst is generally used. In this case, it is preferred that the hydrocarbons be brought into contact with the catalyst, and the conditions of contacting the hydrocarbons with the catalyst are selected such that coke having an atomic ratio of carbon to hydrogen not higher than 0.7 is deposited on the surface of the catalyst. For example, there is a method of contacting hydrocarbons having a ratio of olefin components in the composition of not more than about 10% by volume, a content of dienes of not more than 0.1% by volume, a content of bicyclic aromatics of not more than about 5% volume, and a content of tricyclic or more aromatics of not more about 1% by volume and having a boiling point of not higher than about 300°C with the catalyst together with hydrogen. Furthermore, it more preferred to use hydrocarbons not containing olefin components, dienes, and bicyclic or more aromatics. This is because these components have a possibility of becoming materials which result in the formation of a strong coke having an atomic ratio of carbon to hydrogen of higher than 0.7.

Examples of the hydrocarbons which can be used in this invention are a straight naphtha, kerosene, and gas oil fractions obtained in a petroleum refining process, and further light hydrocarbons having C₁ to C₄ compounds may be used.

The contact temperature of the hydrocarbons with the catalyst can be desirably selected in the range of from about 200°C to 350°C. If the contact temperature is lower than 200°C, the deposition speed of coke is so slow that such a temperature is not practical. If the contact temperature is higher than 350°C, the deterioration of the catalyst is feared, and further the cyclization and the polycondensation of coke are liable to proceed. Thereby, the formation of a strong coke wherein the atomic ratio of carbon to hydrogen is higher than 0.7 proceeds. Also, as the temperature becomes higher, the deposition speed of coke becomes faster.

Other conditions for contacting the hydrocarbons with the catalyst can be selected from a hydrogen partial pressure of from 5 to 50 kg/cm², a liquid hourly space velocity (LHSV) of from 1 to 10 per hour, and a hydrogen/oil ratio of from 16.9 to 507 Nm³/l (100 to 3000 scf/bbl). Since the relation between the conditions of contacting the hydrocarbons with the catalyst and the deposited amount of coke differs according to the kind of the catalyst, the deposited amount is confirmed empirically, and the treatment conditions in an actual apparatus may be determined accordingly.

The pre-treatment for depositing coke on the surface of the catalyst in this invention may be carried out before or after the pre-sulfurization of the catalyst or may be carried out simultaneously with the pre-sulfurization, but when the hydrocarbons are brought into contact with the catalyst without pre-sulfurizing the catalyst, it sometimes happens that a hydrogenation cracking reaction occurs, and hence it is preferred to carry out the coke deposition treatment after pre-sulfurizing the catalyst.

As the catalyst having coke deposited on the surface thereof, a drawn out catalyst used for an ordinary hydrogenation refining of petroleum can also be used. This is because since in an ordinary hydrogenation refining apparatus for petroleum, coke is gradually deposited on the catalyst used during the use, and it sometimes happens that coke is deposited on the surface of the drawn out catalyst used in an amount of from 3 to 10% by weight, which is the range defined in this invention.

However, in the case of the drawn out catalyst used for an ordinary hydrogenation refining of petroleum, since the catalyst was used for a long period of time of at least one year, the cyclization and the polycondensation of the coke deposited on the catalyst proceeded to frequently form a strong coke wherein the atomic ratio of carbon to hydrogen was higher than 0.7. Thus, such a catalyst has the faults that the activity is low as compared with the activity of the catalyst obtained by depositing coke on a new catalyst and that the life of the catalyst is short as compared with the latter catalyst. Accordingly, in the case of using a drawn out catalyst, it is better to use the catalyst after carrying out an analysis of the coke on the catalyst and an evaluation of the activity of the catalyst.

As the drawn out catalyst, a catalyst used in a desulfurization apparatus for a naphtha, kerosene, or a gas oil is preferably used. Since the catalyst used for the treatment of heavy oils has deposited thereon a coke having a very high atomic ratio of carbon to hydrogen, the use of the catalyst is undesirable in this invention.

As the catalyst being used for a hydrodesulfurization apparatus which is applied for the present invention, a hydrodesulfurization catalyst composed of a desulfurization active metal carried by a porous inorganic oxide carrier, which is usually used in the field of petroleum refining, can be used.

As the porous inorganic oxide carrier, there are alumina, silica, titania or magnesia, and they can be used singly or as a mixture thereof. Among these materials, alumina and silica-alumina are preferably used.

As the desulfurization active metal, there are chromium, molybdenum, tungsten, cobalt or nickel, and they can be used singly or as a mixture thereof. Among these metals, cobalt-molybdenum and nickel-cobalt-molybdenum are preferably used. These metals can exist on the carrier in the form of each metal, each oxide, each sulfide, or a mixture thereof. As the carrying method of the active metal, a known method such as an impregnation method, 9r a coprecipitation method, can be used.

There is no particular restriction on the system of the reaction tower, but a fixed bed system is preferred. For contacting the catalyst with a catalytically cracked gasoline fraction and hydrogen, an ascending cocurrent system, a descending cocurrent system, or a counter-current system may be employed. These operations are known in the field of petroleum refining, and they can be optionally selected.

The desulfurization reaction conditions in the present invention include a low temperature, a low pressure, and a high hydrogen/oil ratio as compared with the case of an ordinary desulfurization of a naphtha, etc., and the reaction temperature can be selected in the range of from 200°C to 350°C, the hydrogen partial pressure in the range of from 5 to 30 kg/cm², the hydrogen/oil ratio in the range of from 84.5 to 507 Nm³/l (500 to 3000 scf/bbl), and the liquid hourly space velocity (LHSV) in the range of from 2 to 10 per hour. More preferably, by selecting the reaction temperature in the range of from 200°C to 300°C and the hydrogen partial pressure in the range of from 5 to 15 kg/cm², the hydrogenation of olefins is more restrained, and the dehydration reaction can be carried out while keeping a high octane value, which is an important feature of the present invention.

The present invention is explained in more detail by the following examples, which should not be construed as limiting the present invention in any way; the invention being defined in the appended claims. Unless otherwise indicated, all parts, percents, or ratios are by weight.

### Example 1

In each of two fixed bed, ascending, cocurrent systems, a small-sized reaction apparatus was packed with 60 ml of a 1,59 mm (1/16-inch), extrusion-molded, commercially available catalyst composed of an alumina carrier carrying thereon 4% by weight CoO and 15% by weight MoO₃.

Then, a straight run gasoline fraction of a temperature of from 30°C to 150°C added with 5% by weight dimethyl disulfide was used for pre-sulfurization in each of the two reaction apparatus for 5 hours at a temperature of 300°C, a pressure of 15 kg/cm², an LHSV of 2 per hour, and a hydrogen/oil ratio of 84.5 Nm³/l (500 scf/bbl).

After finishing the pre-sulfurization, the temperature of each reaction apparatus was increased to 330°C, and a straight run kerosene (olefin content: not detected, dienes: not detected, bicyclic or more aromatics: 0.5% by volume) having a boiling point range of from 150°C to 250°C was passed through each reaction apparatus for 24 hours at an LHSV of 5 per hour, a hydrogen partial pressure of 15 kg/cm², and a hydrogen/oil ratio of 84.5 Nm³/l (500 scf/bbl). When the catalyst was taken out from one of the reaction apparatus and analyzed, the deposited amount of coke was 3.9% by weight, and the atomic ratio of carbon to hydrogen was 0.53.

In another reaction apparatus, catalytically cracked gasoline of 80°C to 220°C fractions obtained by catalytically cracking a stock oil containing an atmospheric residual oil was successively subjected to a desulfurization reaction test as catalytically cracked gasoline. The density was 0.779 g/cm³ at 15°C, the sulfur content was 220 ppm by weight, the olefin content was 32% by volume, and the research octane number was 87.1.

For the reaction conditions, the temperature was 250°C, the hydrogen partial pressure was 12 kg/cm², the LHSV was 7 per hour, and the hydrogen/oil ratio was 338 Nm³/l (2000 scf/bbl). As a result thereof, hydrodesulfurization treated catalytically cracked gasoline having a sulfur content of 63 ppm by weight, an olefin content of 29% by volume, and a research octane number of 86.0 was obtained.

### Example 2

Using the two reaction apparatus and the catalyst as used in Example 1, pre-sulfurization was carried out in the same manner as in Example 1.

After the pre-sulfurization was over, the temperature of each reaction apparatus was increased to 350°C, and a straight run heavy gasoline fraction (olefin content: not detected, dienes: not detected, bicyclic or more aromatics: 0.1% by volume) having a boiling point range of from 120°C to 230°C was passed through each reaction apparatus for 72 hours at an LHSV of 5 per hour, a pressure of 15 kg/cm², and a hydrogen/oil ratio of 84.5 Nm³/l (500 scf/bbl).

When the catalyst was taken out from one of the reaction apparatus and analyzed, the deposited amount of coke was 7.3% by weight, and the atomic ratio of carbon to hydrogen was 0.58.

In another reaction apparatus, the catalytically cracked gasoline as used in Example 1 was subjected to a desulfurization reaction test under the same conditions as in Example 1. As a result thereof, hydrodesulfurization treated catalytically cracked gasoline having a sulfur content of 72 ppm by weight, an olefin content of 31% by volume, and a research octane number of 86.9 was obtained.

### Example 3

Using the two reaction apparatus and the catalyst as used in Example 1, pre-sulfurization was carried out in the same manner as in Example 1.

After the pre-sulfurization was over, a mixture oil of 20 parts by weight of the catalytically cracked gasoline of 80°C to 220°C fractions and 80 parts by weight of the straight run kerosene fractions having a boiling point range of about 150°C to 250°C as used in Example 1 was passed through each reaction apparatus for 72 hours at a temperature of 300°C, an LHSV of 5 per hour, a pressure of 15 kg/cm², and a hydrogen/oil ratio of 84.5 Nm³/l (500 scf/bbl).

When the catalyst was taken out from one of the reaction apparatus and analyzed, the deposited amount of coke was 5.8% by weight, and the atomic ratio of carbon/hydrogen was 0.55.

Then, using the catalytically cracked gasoline as used in Example 1, the desulfurization reaction test was carried out using another reaction apparatus under the same conditions as in Example 1. As a result thereof, hydrodesulfurization treated catalytically cracked gasoline having a sulfur content of 65 ppm by weight, an olefin content of 30% by volume, and a research octane number of 86.7 was obtained.

### Example 4

When coke of a hydrodesulfurized catalyst (a 1/16-inch (1.59 mm), extrusion-molded, commercially available catalyst composed of an alumina carrier carrying 4.5% by weight CoO and 17% by weight MoO₃) used for the desulfurization of gas oils for 2 years was analyzed, the deposited amount of the coke was 8.6% by weight, and the atomic ratio of carbon to hydrogen was 0.74. Then, 60 ml of the catalyst was packed in the reaction apparatus used in Example 1, and using the catalytically cracked gasoline as used in Example 1, the desulfurization reaction test was carried out under the same conditions as in Example 1. As a result thereof, hydrodesulfurization treated catalytically cracked gasoline having a sulfur content of 143 ppm by weight, an olefin content of 31% by volume, and a research octane number of 86.9 was obtained.

Then, the temperature of the reaction apparatus was increased from 250°C to 300°C, and then a desulfurization reaction was carried out under the same conditions as above except the temperature. As a result thereof, hydro-desulfurization treated catalytically cracked gasoline having a sulfur content of 48 ppm by weight, an olefin content of 27% by volume, and a research octane number of 84.5 was obtained.

### Comparative Example

Using the reaction apparatus and the catalyst as used in Example 1, pre-sulfurization was carried out in the same manner as in Example 1.

Directly after the pre-sulfurization, using the catalytically cracked gasoline as used in Example 1, a desulfurization reaction test was carried out under the same conditions as in Example 1. In this case, since heat was generated by the hydrogenation reaction of olefins and the temperature of the catalyst layer was increased, the temperature of the electric furnace was controlled to lower the temperature of the catalyst layer to 250°C. As a result thereof, hydrodesulfurization treated catalytically cracked gasoline having a sulfur content of 37 ppm by weight, an olefin content of 8% by volume, and a research octane number of 79.1 was obtained.

According to the present invention of subjecting catalytically cracked gasoline containing sulfur components and olefin components to a hydrodesulfurization treatment, which comprises carrying out the reaction using a coke-modified catalyst having deposited on the surface thereof coke in an amount of from 3 to 10% by weight to the catalyst, the hydrogenation reaction of olefins is restrained from the beginning of the reaction, whereby lowering of the octane value is less, the heat generation is easily controlled, and a stabilized reaction can be carried out.

## Claims

1. A desulfurization method for catalytically cracked gasoline, which comprises pretreating a catalyst to deposit coke on its surface in an amount of from 3 to 10% by weight of the catalyst, said coke having an atomic ratio of carbon to hydrogen of not higher than 0.7, and then initiating a hydrodesulfurization reaction of catalytically cracked gasoline containing sulfur compounds using the catalyst which has been pretreated.

2. The desulfurization method as described in claim 1, wherein for the pretreating before initiating the hydrodesulfurization reaction, a hydrocarbon oil having a composition in which olefin components are contained in the composition in an amount of not more than about 10% by volume, a content of dienes is not more than 0.1% by volume, a content of bicyclic aromatics is not more than about 5% by volume, and a content of a tricyclic or more aromatics is not more than about 1% by volume, and having a boiling point of not higher than about 300°C, is brought into contact with the catalyst together with hydrogen at a temperature of from 200 to 350°C.

3. The desulfurization method as defined in claim 1 or 2, wherein the catalyst is packed in a reaction apparatus and presulfurized .

4. The desulfurization method as described in any one of the claims 1 to 3 wherein the hydrodesulfurization reaction of the catalytically cracked gasoline is carried out under a reaction temperature of from 200 to 300°C, a hydrogen partial pressure of from 5 to 15 kg/cm², a hydrogen/oil ratio of from 84,5 to 507 Nm³/l (500 to 3000 scf/bbl), and a liquid hourly space velocity of from 2 to 10 per hour.

5. The desulfurization method as described in any one of the claims 1 to 4, wherein the catalyst contains cobalt and molybdenum.

6. The desulfurization method as described in any one of the claims 1 to 5, wherein the catalyst contains nickel, cobalt and molybdenum.

7. The desulfurization method as described in any one of the claims 1 to 6, wherein the reaction apparatus is a fixed bed system.

## Patentansprüche

1. Entschwefelungsverfahren für katalytisch gecracktes Benzin, umfassend Stufen, in denen man einen Katalysator vorbehandelt, um Kokskohlenstoff auf seiner Oberfläche in einer Menge von 3 bis 10 Gew.% des Katalysators abzuscheiden, wobei der genannte Kokskohlenstoff ein Atomverhältnis von Kohlenstoff zu Wasserstoff von nicht höher als 0,7 aufweist, und man dann eine Hydrodesulfurierungsreaktion von katalytisch gecracktem Benzin, das Schwefelverbindungen enthält, unter Verwendung des Katalysators initiiert, der vorbehandelt worden ist.

2. Entschwefelungsverfahren gemäß Anspruch 1, wobei zur Vorbehandlung vor Initiierung der Hydrodesulfurierungsreaktion ein Kohlenwasserstofföl, das eine Zusammensetzung, worin Olefin-Komponenten in der Zusammensetzung in einer Menge von nicht mehr als ca. 10 Vol.%, ein Gehalt an Dienen von nicht mehr als 0,1 Vol.%, ein Gehalt von bicyclischen Aromaten von nicht mehr als ca. 5 Vol.% und ein Gehalt an tricyclischen oder höher kondensierten Aromaten von nicht mehr als ca. 1 Vol.% enthalten sind, und das einen Siedepunkt von nicht höher als 300°C aufweist, in Kontakt mit dem Katalysator zusammen mit Wasserstoff bei einer Temperatur von 200 bis 350°C gebracht wird.

3. Entschwefelungsverfahren gemäß Anspruch 1 oder 2, wobei der Katalysator in eine Reaktionsvorrichtung gepackt und vorsulfuriert wird.

4. Entschwefelungsverfahren gemäß einem der Ansprüche 1 bis 3, wobei die Hydrodesulfurierungsreaktion unter einer Reaktionstemperatur von 200 bis 300°C, einem Wasserstoff-Partialdruck von 5 bis 15 kg/cm², einem Wasserstoff/Öl-Verhältnis von 84,5 bis 507 Nm³/l (500 bis 3000 scf/bbl) und bei einer stündlichen Volumengeschwindigkeit des Flüssigkeitsstroms von 2 bis 10 pro h durchgeführt wird.

5. Entschwefelungsverfahren gemäß einem der Ansprüche 1 bis 4, worin der Katalysator Kobalt und Molybdän enthält.

6. Entschwefelungsverfahren gemäß einem der Ansprüche 1 bis 5, worin der Katalysator Nickel, Kobalt und Molybdän enthält.

7. Entschwefelungsverfahren gemäß einem der Ansprüche 1 bis 6, worin die Reaktionsvorrichtung durch ein Festbett-System dargestellt ist.

## Revendications

1. Procédé de désulfurisation pour une essence craquée catalytiquement, qui comprend le prétraitement d'un catalyseur pour déposer du coke sur sa surface en une quantité de 3 à 10% en poids du catalyseur, ledit coke ayant un rapport atomique du carbone à l'hydrogène qui n'est pas supérieur à 0,7 et ensuite l'initiation d'une réaction d'hydrodésulfurisation d'essence craquée catalytiquement contenant des composés soufrés en utilisant le catalyseur qui a été prétraité.

2. Procédé de désulfurisation tel que décrit dans la revendication 1, caractérisé en ce que pour le traitement avant l'initiation de la réaction d'hydrodésulfurisation, un pétrole hydrocarboné ayant une composition dans laquelle les composés oléfiniques sont contenus dans la composition en une quantité qui n'est pas supérieure à environ 10% en volume, une teneur en diènes qui n'est pas supérieure à 0,1% en volume, une teneur en composés aromatiques bicycliques qui n'est pas supérieure à environ 5% en volume, et une teneur en un composé aromatique tricyclique ou plus qui n'est pas supérieure à environ 1% en volume et ayant un point d'ébullition qui n'est pas supérieur à environ 300°C, est porté au contact du catalyseur avec de l'hydrogène à une température de 200 à 350°C.

3. Procédé de désulfurisation tel que défini dans la revendication 1 ou 2, caractérisé en ce que le catalyseur est rempli dans un appareil réactionnel et présulfurisé.

4. Procédé de désulfurisation tel que décrit dans l'une quelconque des revendications 1 à 3, caractérisé en ce que la réaction d'hydrodésulfurisation de l'essence craquée catalytiquement est effectuée à une température réactionnelle de 200 à 300°C, une pression partielle d'hydrogène de 5 à 15 kg/cm², un rapport hydrogène/pétrole de 84,5 à 507 Nm³/l (500 à 3000 scf/bbl), et une vitesse spatiale horaire de liquide de 2 à 10 par heure.

5. Procédé de désulfurisation tel que décrit dans l'une quelconque des revendications 1 à 4, caractérisé en ce que le catalyseur contient du cobalt et du molybdène.

6. Procédé de désulfurisation tel que décrit dans l'une quelconque des revendications 1 à 5, caractérisé en ce que le catalyseur contient du nickel, du cobalt et du molybdène.

7. Procédé de désulfurisation tel que décrit dans l'une quelconque des revendications 1 à 6, caractérisé en ce que l'appareil réactionnel est un système à lit fixe.
